# EUROPÄISCHE PATENTSCHRIFT

(11) **EP 3 313 595 B1**
(45) Veröffentlichungstag und Bekanntmachung des Hinweises auf die Patenterteilung: **05.01.2022**
(21) Anmeldenummer: 16731125.7
(22) Anmeldetag: 21.06.2016
(51) Int. Cl.: B22F 10/28, B22F 10/36, B22F 10/37, B22F 12/60, B22F 12/90, B29C 64/153, B33Y 10/00, B33Y 30/00, B33Y 50/02, B22F 12/00, B22F 12/49

(54) **VORRICHTUNG ZUR GENERATIVEN HERSTELLUNG WENIGSTENS EINES DREIDIMENSIONALEN OBJEKTS**
APPARATUS FOR THE ADDITIVE MANUFACTURING OF AT LEAST ONE THREE-DIMENSIONAL OBJECT
DISPOSITIF DE FABRICATION ADDITIVE D'AU MOINS UN OBJET TRIDIMENSIONNEL

(30) Priorität: 25.06.2015 DE 102015110264
(43) Veröffentlichungstag der Anmeldung: 02.05.2018
(60) Teilanmeldung: 18186338.2
(73) Patentinhaber: CL Schutzrechtsverwaltungs GmbH, 96215 Lichtenfels (DE)
(72) Erfinder: HERZOG, Frank, 96215 Lichtenfels (DE); BECHMANN, Florian, 96215 Lichtenfels (DE); ZEULNER, Fabian, 96215 Lichtenfels (DE)
(74) Vertreter: Hafner & Kohl PartmbB
(86) Internationale Anmeldenummer: PCT/EP2016/064237
(87) Internationale Veröffentlichungsnummer: WO 2016/207123

(56) Entgegenhaltungen:
- WO-A2-2014/074947
- DE-A1-102010 052 206
- DE-A1-102011 009 624
- US-A1- 2004 173 946
- US-A1- 2009 152 771
- US-A1- 2010 176 539
- US-A1- 2011 061 591
- US-A1- 2015 165 683

## Beschreibung

Die Erfindung betrifft eine Vorrichtung zur generativen Herstellung wenigstens eines dreidimensionalen Objekts durch schichtweises selektives Verfestigen wenigstens eines verfestigbaren Baumaterials vermittels wenigstens eines von wenigstens einer Strahlungserzeugungseinrichtung erzeugten Energiestrahls.

Derartige Vorrichtungen sind zur generativen Herstellung dreidimensionaler Objekte mit unterschiedlichen Querschnittsgeometrien dem Grunde nach bekannt. Herzustellende dreidimensionale Objekte werden durch schichtweises selektives Verfestigen eines verfestigbaren Baumaterials in entsprechenden Querschnittsbereichen der herzustellenden Objekte entsprechenden Bereichen vermittels eines von einer Strahlungserzeugungseinrichtung erzeugten Energiestrahls sukzessive aufgebaut.

Entsprechende Vorrichtungen umfassen u.a. eine Strahlerzeugungseinrichtung zur Erzeugung eines Energiestrahls zur Verfestigung eines verfestigbaren Baumaterials sowie eine Beschichtungseinrichtung zur Durchführung eines Beschichtungsvorgangs zur Aufbringung einer definierten Baumaterialschicht des verfestigbaren Baumaterials auf eine Bauebene oder auf eine im Rahmen der Durchführung eines vorherigen Beschichtungsvorgangs zuvor aufgebrachte Baumaterialschicht.

Für eine exakte selektive Verfestigung des verfestigbaren Baumaterials, welche eine wesentliche Voraussetzung für die Herstellung qualitativ hochwertiger dreidimensionaler Objekte ist, ist eine hohe Güte der vermittels der Beschichtungseinrichtung aufgebrachten Baumaterialschichten von erheblicher Bedeutung.

Die Güte jeweiliger vermittels entsprechender Beschichtungseinrichtungen aufgebrachter Baumaterialschichten ist bis dato nur nach Beendigung der Durchführung eines Beschichtungsvorgangs erfassbar. Dies ist zeitaufwändig und insoweit verbesserungswürdig.

Die Druckschriften US 2015/165683 A1 und US 2004/173946 A1 beziehen sich auf eine Vorrichtung zur generativen Herstellung wenigstens eines dreidimensionalen Objektes gemäß dem Oberbegriff des Anspruchs 1 der vorliegenden Erfindung.

Der Erfindung liegt die Aufgabe zugrunde, eine demgegenüber verbesserte Vorrichtung zur generativen Herstellung wenigstens eines dreidimensionalen Objekts anzugeben.

Die Aufgabe wird durch eine Vorrichtung gemäß Anspruch 1 und ein Verfahren gemäß Anspruch 11 gelöst. Die jeweiligen abhängigen Ansprüche betreffen zweckmäßige Ausführungsformen der Vorrichtung.

Die hierin beschriebene Vorrichtung dient der generativen Herstellung wenigstens eines dreidimensionalen Objekts durch schichtweises selektives Verfestigen wenigstens eines verfestigbaren Baumaterials vermittels wenigstens eines von wenigstens einer Strahlungserzeugungseinrichtung erzeugten Energiestrahls. Ein entsprechend verfestigbares Baumaterial ist typischerweise pulverartig bzw. pulverförmig. Bei dem Baumaterial kann es sich sonach z. B. um ein entsprechend verfestigbares Metallpulver(gemisch) und/oder um ein entsprechend verfestigbares Kunststoffpulver(gemisch) handeln.

Bei einer entsprechenden Strahlungserzeugungseinrichtung kann es sich um eine Lasererzeugungseinrichtung zur Erzeugung eines Laserstrahls, kurz einen Laser, handeln bzw. kann die Strahlungserzeugungseinrichtung wenigstens eine(n) solche(n) umfassen. In diesem Fall kann die Vorrichtung z. B. als selektive Lasersintervorrichtung, kurz SLS-Vorrichtung, zur Durchführung selektiver Lasersinterprozesse oder als selektive Laserschmelzvorrichtung, kurz SLM-Vorrichtung, zur Durchführung selektiver Laserschmelzprozesse ausgebildet sein. Selbstverständlich kann es sich bei einer entsprechenden Strahlungserzeugungseinrichtung auch um eine Teilchenerzeugungseinrichtung zur Erzeugung einer Teilchenstrahlung, handeln bzw. kann die Strahlungserzeugungseinrichtung wenigstens eine solche umfassen.

Die Vorrichtung umfasst in an sich bekannter Weise wenigstens eine Beschichtungseinrichtung zur Durchführung wenigstens eines Beschichtungsvorgangs zur Aufbringung einer definierten Baumaterialschicht des wenigstens einen verfestigbaren Baumaterials auf eine Bauebene, in welcher eine selektive Verfestigung des verfestigbaren Baumaterials stattfindet, oder auf eine im Rahmen der Durchführung eines vorherigen Beschichtungsvorgangs zuvor aufgebrachte Baumaterialschicht. Eine im Rahmen der Durchführung eines vorherigen Beschichtungsvorgangs zuvor aufgebrachte Baumaterialschicht kann sonach ebenfalls als Bauebene bezeichnet bzw. erachtet werden, da in dieser ebenso selektive eine Verfestigung eines verfestigbaren Baumaterials stattfindet.

Eine entsprechende Beschichtungseinrichtung umfasst erfindungsgemäß ein oder mehrere Beschichterelemente, d. h. z. B. Beschichterklingen, welche zur Ausbildung definierter Baumaterialschichten über eine Bauebene bewegt werden. Entsprechend ist eine Beschichtungseinrichtung erfindungsgemäß bewegbar relativ zu einer Bauebene gelagert.

Die Vorrichtung umfasst ferner wenigstens eine Erfassungseinrichtung zur Erfassung von die Güte, insbesondere der Oberfläche, einer vermittels der Beschichtungseinrichtung im Rahmen der Durchführung eines Beschichtungsvorgangs aufgebrachten Baumaterialschicht zumindest abschnittsweise beschreibenden Schichtinformationen. Die wenigstens eine Erfassungseinrichtung ist dazu eingerichtet, entsprechende Schichtinformationen während eines vermittels der Beschichtungseinrichtung durchgeführten Beschichtungsvorgangs zu erfassen. Vermittels einer entsprechenden Erfassungseinrichtung ist es sonach möglich, die Güte, insbesondere der Oberfläche, einer vermittels der Beschichtungseinrichtung aufgebrachten Baumaterialschicht bereits während eines vermittels der Beschichtungseinrichtung durchgeführten Beschichtungsvorgangs zu erfassen. Die Erfassungseinrichtung erfasst hierzu entsprechende Schichtinformationen, welche die Güte, insbesondere der Oberfläche, einer vermittels der Beschichtungseinrichtung im Rahmen der Durchführung eines Beschichtungsvorgangs aufgebrachten Baumaterialschicht zumindest abschnittsweise qualitativ oder quantitativ beschreiben. Die Güte einer vermittels der Beschichtungseinrichtung aufgebrachten Baumaterialschicht betrifft insbesondere Parameter, wie Glattheit, Schichtdicke allgemein die Ordnung, der Baumaterialschicht respektive deren Oberfläche.

Unter im Hinblick auf ihre Güte zu erfassenden bzw. erfassten, vermittels der Beschichtungseinrichtung aufgebrachten Baumaterialschichten können auch bereits verfestigte Baumaterialschicht(bereiche) und somit Abschnitte eines herzustellenden dreidimensionalen Objekts zu verstehen sein. Mithin können entsprechende Schichtinformationen auch die Güte von dreidimensionalen Objekten bzw. Objektoberflächen beschreiben, so dass auch eine Erfassung der Güte von dreidimensionalen Objekten bzw. Objektoberflächen möglich ist, was z. B. bei der Herstellung von Hybridbauteilen zweckmäßig sein kann, um bauraumbezogene Konturen aufzunehmen bzw. zu erzeugen.

Die Erfassung der Güte entsprechender Baumaterialschichten kann in jedem Fall mit entsprechenden Beschichtungsvorgängen einhergehen; die Erfassung der Güte entsprechender Baumaterialschichten erfolgt also simultan mit der Durchführung entsprechender Beschichtungsvorgänge zur Aufbringung definierter Baumaterialschichten auf eine Bauebene. Derart können Nebenzeiten reduziert und generative Bauprozesse insgesamt beschleunigt werden. Im Vergleich zu dem eingangs beschriebenen Stand der Technik ist es nicht erforderlich, die Beendigung der Durchführung eines Beschichtungsvorgangs abzuwarten, um die Güte einer jeweiligen im Rahmen des Beschichtungsvorgangs aufgebrachten Baumaterialschicht zu erfassen. Die Erfassung der Güte, insbesondere der Oberfläche, entsprechender Baumaterialschichten benötigt zudem nicht notwendig Bedienpersonal, was sich in fertigungs- bzw. prozesstechnischer und somit auch wirtschaftlicher Hinsicht positiv auf die Prozessführung auswirkt.

Über die Erfassungseinrichtung ist zudem eine (frühzeitige) Erfassung von Beeinträchtigungen, d. h. Beschädigungen bzw. Defekten, einer Beschichtungseinrichtung möglich, da sich diese unmittelbar in der vermittels der Beschichtungseinrichtung aufgebrachten Baumaterialschicht widerspiegeln und so über entsprechende Schichtinformationen beschrieben werden können. Typischerweise sind Beeinträchtigungen einer Beschichtungseinrichtung daran zu erkennen, dass sich ein definierter Abstand zwischen der aufgebrachten Baumaterialschicht und der Erfassungseinrichtung ändert. Diese Abstandsänderung kann sich auf die Schichtinformationen auswirken und sonach über entsprechende Schichtinformationen abgebildet werden. Bei einer, wie im Folgenden erläutert, als Bilderfassungseinrichtung ausgebildeten oder eine solche umfassenden Erfassungseinrichtung können entsprechende Abstandsänderungen Änderungen der Auflösung, Helligkeit, etc. bedingen.

Eine entsprechende Erfassungseinrichtung kann insbesondere als eine Bilderfassungseinrichtung, insbesondere eine Kameraeinrichtung, zur Erfassung von die Güte, insbesondere der Oberfläche, einer vermittels der Beschichtungseinrichtung im Rahmen der Durchführung eines Beschichtungsvorgangs aufgebrachten Baumaterialschicht zumindest abschnittsweise beschreibenden Schichtbildinformationen ausgebildet ist oder wenigstens eine solche umfasst. Entsprechende Bilderfassungseinrichtungen können z. B. als CCD-Kamera ausgebildet sein bzw. eine CCD- oder sonstige optische Sensorik umfassen. Der Fokus entsprechender Bilderfassungs- bzw. Kameraeinrichtungen ist selbstverständlich auf eine(n) zu erfassende(n) Baumaterialschicht(bereich) ausgerichtet bzw. eingestellt.

Eine entsprechende Bilderfassungseinrichtung kann mit Beleuchtungsmitteln zur zumindest zeitweisen Aus- oder Beleuchtung eines zu erfassenden Baumaterialschichtbereichs ausgestattet sein. Bei entsprechenden Beleuchtungsmitteln kann es sich, insbesondere bei einer Kameraeinrichtung, z. B. um eine Einrichtung zur Erzeugung eines Blitzlichts handeln.

Grundsätzlich kann eine entsprechende Bilderfassungseinrichtung dazu eingerichtet sein, entsprechende Schichtbildinformationen eindimensional, d. h. spalten- oder zeilenmäßig, oder mehrdimensional zu erfassen. Bei einer Bilderfassungseinrichtung kann es sich sonach um eine Zeilenkamera handeln, welche sich durch eine vergleichsweise hohe laterale Auflösung auszeichnet. In diesem Zusammenhang sind Auflösungen von 1600 dpi oder mehr denkbar.

Insgesamt ist damit eine verbesserte Vorrichtung zur generativen Herstellung wenigstens eines dreidimensionalen Objekts gegeben.

Neben den bisher genannten Funktionskomponenten der Vorrichtung umfasst die Vorrichtung selbstverständlich weitere Funktionskomponenten, welche zur Realisierung generativer Bauprozesse und somit zur generativen Herstellung dreidimensionaler Objekte typischerweise erforderlich sind. Unter Funktionskomponenten der Vorrichtung sind im Allgemeinen Komponenten oder Komponentengruppen zu verstehen, welche, typischerweise unmittelbar, im Zusammenhang mit einem generativen Bauprozess stehen. Hierzu zählt insbesondere eine Gehäuseeinrichtung mit wenigstens einer Prozesskammer, im Allgemeinen einem abgeschlossenen Volumen, in welchem generative Bauprozesse zur Herstellung dreidimensionaler Objekte stattfinden, wenigstens eine Trageinrichtung zum Tragen herzustellender bzw. hergestellter dreidimensionaler Objekte, wobei die Trageinrichtung wenigstens ein (höhen)beweglich gelagertes Tragelement umfassen kann, wenigstens eine Baumaterialaufbring- und/oder Dosiereinrichtung zur Aufbringung und/oder Dosierung von Baumaterial in die Prozesskammer sowie wenigstens eine Strahlablenkeinrichtung zur gezielten Ablenkung eines von der Strahlungserzeugungseinrichtung erzeugten Energiestrahls auf einen bestimmten Bereich innerhalb einer Prozesskammer der Vorrichtung. In einer entsprechenden Prozesskammer herrscht typischerweise eine inerte Schutzgasatmosphäre, d. h. die Prozesskammer ist typischerweise mit einem inerten Schutzgas, z. B. Argon, Stickstoff, etc., befüllt bzw. wird von einem solchen durchströmt.

Die vorstehende Aufzählung entsprechender Funktionskomponenten der Vorrichtung ist nicht abschließend.

Eine entsprechende Erfassungseinrichtung ist erfindungsgemäß relativ zu einer (zu beschichtenden) Bauebene bzw. einer aufgebrachten Baumaterialschicht bewegbar gelagert. Die Erfassungseinrichtung wird so einer Bewegung einer relativ zu einer (zu beschichtenden) Bauebene bzw. einer aufgebrachten Baumaterialschicht bewegbar gelagerten Beschichtungseinrichtung im Rahmen der Durchführung eines Beschichtungsvorgangs nachgeführt. Die Bewegungsbahn der Erfassungseinrichtung ist erfindungsgemäß identisch mit der Bewegungsbahn der Beschichtungseinrichtung im Rahmen eines Beschichtungsvorgangs.

Erfindungsgemäß, weil wenig Raum innerhalb einer vorrichtungsseitigen Prozesskammer beanspruchend, ist eine entsprechende Erfassungseinrichtung dabei mit einer relativ zu einer (zu beschichtenden) Bauebene bzw. einer aufgebrachten Baumaterialschicht bewegbar gelagerten Beschichtungseinrichtung bewegungsgekoppelt. Die Erfassungseinrichtung wird derart so bei einer Bewegung der Beschichtungseinrichtung im Rahmen der Durchführung eines Beschichtungsvorgangs mitbewegt bzw. der Bewegung der Beschichtungseinrichtung nachgeführt. Die Bewegungsbahn der Erfassungseinrichtung ist erfindungsgemäß identisch mit der Bewegungsbahn einer Beschichtungseinrichtung im Rahmen eines Beschichtungsvorgangs. Eine entsprechende Bewegungskopplung einer entsprechenden Erfassungseinrichtung mit einer entsprechenden Beschichtungseinrichtung ist durch realisiert, dass die Erfassungseinrichtung zumindest abschnittsweise in der Beschichtungseinrichtung angeordnet oder ausgebildet ist. Eine Anordnung einer Erfassungseinrichtung in einer Beschichtungseinrichtung beinhaltet typischerweise eine stoff- und/oder kraft- und/oder formschlüssige, gegebenenfalls (beschädigungs- bzw. zerstörungsfrei) lösbare, bauliche Verbindung zwischen der Erfassungseinrichtung und der Beschichtungseinrichtung. Eine Ausbildung einer Erfassungseinrichtung in einer Beschichtungseinrichtung beinhaltet erfindungsgemäß eine bauliche Integration der Erfassungseinrichtung in die Beschichtungseinrichtung.

Nachfolgend werden unterschiedliche Betriebsmodi der Strahlerzeugungseinrichtung beschrieben, gemäß welchen eine Erzeugung eines Energiestrahls und eine vermittels des erzeugten Energiestrahls erfolgende Verfestigung verfestigbaren Baumaterials entweder nach Beendigung der Durchführung eines Beschichtungsvorgangs oder bereits während eines Beschichtungsvorgangs möglich ist. Die Steuerung des Betriebs der wenigstens einen Strahlerzeugungseinrichtung erfolgt über eine der Strahlerzeugungseinrichtung zugeordnete Steuereinrichtung. Die Steuereinrichtung ist dazu eingerichtet, den Betrieb der wenigstens einen Strahlerzeugungseinrichtung steuernde Steuerinformationen zu erzeugen und an die Strahlerzeugungseinrichtung zu kommunizieren.

Eine entsprechende Strahlungserzeugungseinrichtung kann entsprechend dazu eingerichtet sein, einen Energiestrahl zur Verfestigung eines verfestigbaren Baumaterials nach Beendigung eines vermittels der Beschichtungseinrichtung durchgeführten Beschichtungsvorgangs zu erzeugen. In dieser Variante erfolgt die Verfestigung des Baumaterials erst nach Beendigung des Beschichtungsvorgangs, d. h. typischerweise auch nach der Erfassung entsprechender Schichtinformationen. Der Energiestrahl kann dabei, insbesondere über wenigstens eine Strahlablenkeinrichtung, auf einen Bereich einer aufgebrachten Baumaterialschicht lenkbar sein, zu welchem die wenigstens eine Erfassungseinrichtung bereits entsprechende Schichtinformationen erfasst hat. Dies ist zweckmäßig, als bestimmte Strahleigenschaften des Energiestrahls in Abhängigkeit der durch die Schichtinformationen beschriebenen Güte der aufgebrachten Baumaterialschicht angepasst bzw. eingestellt werden können. Gegebenenfalls kann eine Bestrahlung einer Baumaterialschicht auch unterbleiben, sofern die Güte der aufgebrachten Baumaterialschicht bestimmten vorgebbaren oder vorgegebenen Qualitätskriterien nicht genügt. In diesem Fall kann eine Nutzerinformation an einen Nutzer ausgegeben werden, welche einem Nutzer eine entsprechenden Qualitätskriterien nicht genügende Baumaterialschicht nach Durchführung eines Beschichtungsvorgangs anzeigt.

Alternativ kann eine entsprechende Strahlerzeugungseinrichtung dazu eingerichtet sein, einen Energiestrahl zur Verfestigung des wenigstens einen verfestigbaren Baumaterials (noch) während eines vermittels der Beschichtungseinrichtung durchgeführten Beschichtungsvorgangs zu erzeugen. In dieser Variante erfolgt die Verfestigung des Baumaterials bereits während des Beschichtungsvorgangs, d. h. typischerweise während der Erfassung entsprechender Schichtinformationen. Diese Variante ermöglicht eine besondere Verkürzung von Nebenzeiten sowie eine besondere Beschleunigung generativer Bauprozesse, da Beschichten, Erfassen entsprechender Schichtinformationen und Bestrahlen (im Wesentlichen) simultan oder in engen zeitlichen Abständen durchgeführt werden können. Der Energiestrahl kann dabei ebenso, insbesondere über wenigstens eine Strahlablenkeinrichtung, auf einen Bereich einer vermittels der Beschichtungseinrichtung aufgebrachten Baumaterialschicht lenkbar sein, zu welchem die wenigstens eine Erfassungseinrichtung bereits entsprechende Schichtinformationen erfasst hat. Der Energiestrahl kann der Beschichtungseinrichtung sonach nachlaufend nachgeführt werden. Dies ist, wie vorstehend erwähnt, zweckmäßig, als bestimmte Strahleigenschaften des Energiestrahls hier in Abhängigkeit der durch die Schichtinformationen beschriebenen Güte der aufgebrachten Baumaterialschicht angepasst bzw. eingestellt werden können.

Gegebenenfalls kann eine Bestrahlung einer Baumaterialschicht auch unterbleiben, sofern die Güte der aufgebrachten Baumaterialschicht bestimmten vorgebbaren oder vorgegebenen Qualitätskriterien nicht genügt. In diesem Fall kann eine Nutzerinformation an einen Nutzer ausgegeben werden, welche einem Nutzer eine entsprechenden Qualitätskriterien nicht genügende Baumaterialschicht nach Durchführung eines Beschichtungsvorgangs anzeigt.

Denkbar ist es jedoch auch, dass der oder ein weiterer Energiestrahl, insbesondere über wenigstens eine Strahlablenkeinrichtung, auf einen Bereich einer vermittels der Beschichtungseinrichtung aufgebrachten Baumaterialschicht lenkbar ist, zu welchem die wenigstens eine Erfassungseinrichtung noch keine entsprechenden Schichtinformationen erfasst hat. Der oder ein weiterer Energiestrahl kann der Beschichtungseinrichtung sonach vorlaufend vorgeführt werden. Ein der Beschichtungseinrichtung vorlaufender und ein der Beschichtungseinrichtung nachlaufender Energiestrahl können sich in ihren Strahleigenschaften, insbesondere ihrer Energiedichte, Intensität, etc., unterscheiden; beispielsweise kann ein der Beschichtungseinrichtung vorlaufender Energiestrahl eine Vorfestigung des zu verfestigenden Baumaterials und ein der Beschichtungseinrichtung nachlaufender Energiestrahl eine Nachverfestigung des vorverfestigten Baumaterials bedingen.

Die Vorrichtung kann, wie erwähnt, wenigstens eine Steuereinrichtung zur Steuerung des Betriebs der wenigstens einen Strahlerzeugungseinrichtung umfassen. Die Steuereinrichtung kann dazu eingerichtet sein, den Betrieb der wenigstens einen Strahlerzeugungseinrichtung steuernde Steuerinformationen in Abhängigkeit erfasster Schichtinformationen zu erzeugen. Entsprechende Steuerinformationen können Bestrahlungsinformationen, welche vermittels des Energiestrahls zu bestrahlende Bereiche einer selektiv zu verfestigenden, vermittels der Beschichtungseinrichtung aufgebrachten Baumaterialschicht, und/oder Strahleigenschaften, insbesondere Energiedichten, Intensitäten, etc., eines zu erzeugenden oder erzeugten Energiestrahls beschreiben, beinhalten. Über die Steuereinrichtung ist es sonach möglich, in Abhängigkeit der über entsprechende Schichtinformationen beschriebenen Güte einer vermittels der Beschichtungseinrichtung aufgebrachten Baumaterialschicht bestimmte Bestrahlungsbereiche und/oder Strahleigenschaften eines Energiestrahls anzupassen bzw. einzustellen. Wie erwähnt, kann eine Bestrahlung einer Baumaterialschicht gegebenenfalls auch (bereichsweise bzw. lokal) unterbleiben, sofern die Güte der aufgebrachten Baumaterialschicht (bereichsweise bzw. lokal) bestimmten vorgebbaren oder vorgegebenen Qualitätskriterien nicht genügt.

Eine entsprechende Erfassungseinrichtung respektive dieser zugehörige, insbesondere optische, Erfassungselemente, wie optische Linsen, können bauprozessbedingt, z. B. durch Ablagerungen von feinen Baumaterial- und/oder von Schmauchpartikeln, verunreinigt werden. Der Erfassungseinrichtung kann deshalb wenigstens eine Reinigungseinrichtung zur Entfernung von bauprozessbedingten Verunreinigungen wenigstens eines der wenigstens einen Erfassungseinrichtung zugehörigen, insbesondere optischen, Erfassungselements, z. B. einer optischen Linse, zugeordnet sein. Eine entsprechende Reinigungseinrichtung kann dazu eingerichtet sein, ein fluides Reinigungsmedium auf ein oder entlang wenigstens eines zu reinigenden Erfassungselements zu strömen. Bei einem entsprechenden Reinigungsmedium kann es sich um ein Gas, d. h. z. B. um Kohlenstoffdioxid, Stickstoff, etc., handeln. Ein als Reinigungsmedium verwendetes Gas kann gleichermaßen auch ein inertes Schutzgas sein, welches in eine vorrichtungsseitige Prozesskammer eingeströmt wird.

Sofern ein solches Schutzgas in bzw. durch eine vorrichtungsseitige Prozesskammer geströmt wird, kann die Vorrichtung wenigstens eine, insbesondere bewegbar relativ zu einer Bauebene gelagerte, Umlenkeinrichtung zur Umlenkung eines in eine Prozesskammer der Vorrichtung einströmenden Schutzgasstroms in wenigstens eine von einer Einströmungsrichtung verschiedene Umlenkrichtung umfassen. Derart können individuelle Schutzgasströmungen erzeugt werden. Eine entsprechende Umlenkeinrichtung kann mehrere innerhalb einer Prozesskammer angeordnete oder ausgebildete Umlenkelemente umfassen. Durch geeignete Anordnung und Ausrichtung entsprechender Umlenkelemente kann eine kreislaufartig durch eine Prozesskammer zirkulierende Schutzgasströmung erzeugt werden.

Die Vorrichtung kann ferner wenigstens eine weitere Erfassungseinrichtung zur Erfassung, insbesondere die Abmessungen und/oder die Form und/oder die Temperatur beschreibender, Schmelzbereichsinformationen eines vermittels des wenigstens einen Energiestrahls erzeugten aufgeschmolzenen Baumaterialschichtbereichs ("Schmelzpool"), sowie wenigstens eine der weiteren Erfassungseinrichtung zugeordnete Auswerteeinrichtung zur Auswertung erfasster Schmelzbereichsinformationen im Hinblick auf eine Güte des wenigstens einen herzustellenden dreidimensionalen Objekts umfassen. Derart können generative Bauprozesse nach Art einer sogenannten Schmelzpoolanalyse noch besser überwacht und die Güte herzustellender dreidimensionaler Objekte besser antizipiert bzw. vorausberechnet werden.

Die Vorrichtung kann zudem wenigstens eine Abfangeinrichtung zum Abfangen von teilverfestigtem und/oder nichtverfestigtem Baumaterial, welches sich bauprozessbedingt aus einer zu verfestigenden Baumaterialschicht löst und unkontrolliert in eine vorrichtungsseitige Prozesskammer beschleunigt ist, umfassen. Derart können Beeinträchtigungen der Güte einer vermittels der Beschichtungseinrichtung aufgebrachten Baumaterialschicht durch entsprechendes bauprozessbedingt aus einer zu verfestigenden Baumaterialschicht gelöstes und unkontrolliert in eine vorrichtungsseitige Prozesskammer beschleunigtes Baumaterial verhindert werden. Eine entsprechende Abfangeinrichtung weist typischerweise wenigstens eine, z. B. schlitzartige, Durchtrittsöffnung für den Durchtritt eines Energiestrahls auf. Eine entsprechende Abfangeinrichtung kann ebenso bewegbar relativ zu einer Bauebene gelagert sein.

Die Erfindung betrifft ferner ein Verfahren zur generativen Herstellung wenigstens eines dreidimensionalen Objekts durch schichtweises selektives Verfestigen wenigstens eines verfestigbaren Baumaterials vermittels wenigstens eines von wenigstens einer Strahlungserzeugungseinrichtung zur Erzeugung wenigstens eines Energiestrahls zur Verfestigung wenigstens eines verfestigbaren Baumaterials erzeugten Energiestrahls, insbesondere mit einer wie vorstehend beschriebenen Vorrichtung. Das Verfahren zeichnet sich dadurch aus, dass während eines vermittels einer Beschichtungseinrichtung durchgeführten Beschichtungsvorgangs die Güte, insbesondere der Oberfläche, einer im Rahmen des Beschichtungsvorgangs aufgebrachten Baumaterialschicht beschreibende Schichtinformationen erfasst werden.

Im Rahmen des Verfahrens wird wenigstens eine bewegbar relativ zu einer (zu beschichtenden) Bauebene bzw. einer aufgebrachten Baumaterialschicht gelagerte Erfassungseinrichtung verwendet. Erfindungsgemäß ist es auch, wenigstens eine Beschichtungseinrichtung zur Durchführung wenigstens eines Beschichtungsvorgangs zur Aufbringung einer definierten Baumaterialschicht wenigstens eines verfestigbaren Baumaterials auf eine Bauebene oder auf eine vermittels der Beschichtungseinrichtung im Rahmen der Durchführung eines vorherigen Beschichtungsvorgangs zuvor aufgebrachte Baumaterialschicht wenigstens eines verfestigbaren Baumaterials zu verwenden, welche relativ zu einer Bauebene bewegbar gelagert ist. Die wenigstens eine Erfassungseinrichtung wird erfindungsgemäß mit der wenigstens einen Beschichtungseinrichtung bewegungsgekoppelt.

Im Rahmen des Verfahrens kann wenigstens eine Erfassungseinrichtung verwendet werden, welche als eine Bilderfassungseinrichtung, insbesondere eine Kameraeinrichtung, zur Erfassung von die Güte, insbesondere der Oberfläche, einer vermittels der Beschichtungseinrichtung im Rahmen der Durchführung eines Beschichtungsvorgangs aufgebrachten Baumaterialschicht zumindest abschnittsweise beschreibenden Schichtbildinformationen ausgebildet ist oder wenigstens eine solche umfasst.

Im Rahmen des Verfahrens kann ein Energiestrahl zur Verfestigung des wenigstens einen verfestigbaren Baumaterials nach Beendigung der Erfassung entsprechender Schichtinformationen nach Beendigung eines vermittels der Beschichtungseinrichtung durchgeführten Beschichtungsvorgangs erzeugt werden. Der Energiestrahl kann, insbesondere über wenigstens eine Strahlablenkeinrichtung, auf einen Bereich einer vermittels der Beschichtungseinrichtung aufgebrachten Baumaterialschicht gelenkt werden, zu welchem die wenigstens eine Erfassungseinrichtung bereits entsprechende Schichtinformationen erfasst hat.

Alternativ kann ein Energiestrahl zur Verfestigung des wenigstens einen verfestigbaren Baumaterials (noch) während der Erfassung entsprechender Schichtinformationen während eines vermittels der Beschichtungseinrichtung durchgeführten Beschichtungsvorgangs erzeugt werden. Der Energiestrahl kann, insbesondere über wenigstens eine Strahlablenkeinrichtung, auf einen Bereich einer vermittels der Beschichtungseinrichtung aufgebrachten Baumaterialschicht gelenkt werden, zu welchem die wenigstens eine Erfassungseinrichtung bereits entsprechende Schichtinformationen erfasst hat, oder auf einen Bereich einer vermittels der Beschichtungseinrichtung aufgebrachten Baumaterialschicht gelenkt werden, zu welchem die wenigstens eine Erfassungseinrichtung noch keine entsprechenden Schichtinformationen erfasst hat.

Im Rahmen des Verfahrens kann der Betrieb der wenigstens einen Strahlerzeugungseinrichtung über wenigstens eine Steuereinrichtung zur Steuerung des Betriebs der wenigstens einen Strahlerzeugungseinrichtung gesteuert werden, wobei die Steuereinrichtung den Betrieb der wenigstens einen Strahlerzeugungseinrichtung steuernde Steuerinformationen in Abhängigkeit erfasster Schichtinformationen erzeugt.

Im Rahmen des Verfahrens können bauprozessbedingte Verunreinigungen wenigstens eines der wenigstens einen Erfassungseinrichtung zugehörigen, insbesondere optischen, Erfassungselements vermittels wenigstens einer der Erfassungseinrichtung zugeordneten Reinigungseinrichtung zur entfernt werden.

Grundsätzlich gelten sämtliche Ausführungen im Zusammenhang mit der Vorrichtung analog für das Verfahren und umgekehrt.

Die Erfindung ist anhand von Ausführungsbeispielen in den Zeichnungsfiguren näher erläutert. Dabei zeigen:

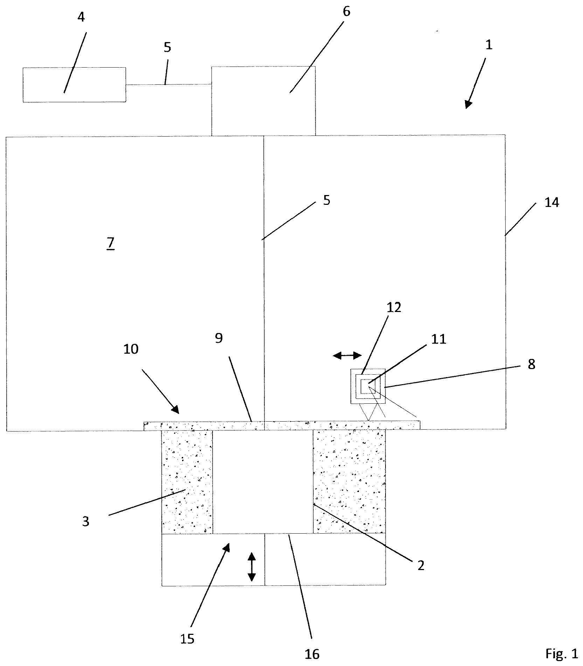

- Fig. 1 - 3: je eine Prinzipdarstellung einer Vorrichtung gemäß einem Ausführungsbeispiel der Erfindung.

Fig. 1 zeigt eine Prinzipdarstellung einer Vorrichtung 1 gemäß einem Ausführungsbeispiel der Erfindung. Die Vorrichtung 1 dient der generativen Herstellung dreidimensionaler Objekte 2 durch schichtweises selektives Verfestigen eines verfestigbaren Baumaterials 3, nämlich eines Metall- oder Kunststoffpulvers, vermittels eines von einer Strahlungserzeugungseinrichtung 4, nämlich einer Lasererzeugungseinrichtung, erzeugten Energiestrahls 5, nämlich eines Laserstrahls.

Die Vorrichtung 1 kann als selektive Lasersintervorrichtung, kurz SLS-Vorrichtung, zur Durchführung selektiver Lasersinterprozesse oder als selektive Laserschmelzvorrichtung, kurz SLM-Vorrichtung, zur Durchführung selektiver Laserschmelzprozesse ausgebildet sein.

Der Strahlungserzeugungseinrichtung 4 ist eine Strahlablenkeinrichtung 6 zur gezielten Ablenkung des von der Strahlungserzeugungseinrichtung 4 erzeugten Energiestrahls 5 auf eine Bauebene 10 innerhalb einer Prozesskammer 7 der Vorrichtung 1 zugeordnet. Zur gezielten Ablenkung des Energiestrahls 5 umfasst die Strahlablenkeinrichtung 6 eine Anzahl an geeigneten Strahlablenkelementen (nicht gezeigt), wie z. B. Ab- oder Umlenkspiegeln. Da es sich bei der Strahlungserzeugungseinrichtung 4 um eine Lasererzeugungseinrichtung handelt, kann die Strahlablenkeinrichtung 6 als Laserscanner, kurz Scanner, bezeichnet bzw. erachtet werden. Die Strahlablenkeinrichtung 6 ist in dem Strahlengang des von der Strahlungserzeugungseinrichtung 4 erzeugten Energiestrahls 5 angeordnet.

Die Vorrichtung 1 umfasst eine Beschichtungseinrichtung 8 zur Durchführung von Beschichtungsvorgängen zur Aufbringung einer definierten Baumaterialschicht 9 des verfestigbaren Baumaterials 3 auf eine Bauebene 10, in welcher eine selektive Verfestigung des verfestigbaren Baumaterials 3 stattfindet, oder auf eine im Rahmen der Durchführung eines vorherigen Beschichtungsvorgangs zuvor aufgebrachte Baumaterialschicht 9. Eine im Rahmen der Durchführung eines vorherigen Beschichtungsvorgangs zuvor aufgebrachte Baumaterialschicht 9 kann ebenfalls als Bauebene 10 bezeichnet bzw. erachtet werden, da in dieser ebenso eine selektive Verfestigung des verfestigbaren Baumaterials 3 stattfindet.

Die Beschichtungseinrichtung 8 ist, wie durch den horizontal ausgerichteten Doppelpfeil angedeutet, relativ zu der Bauebene 10 bewegbar gelagert und umfasst ein oder mehrere Beschichterelemente (nicht gesondert bezeichnet), d. h. z. B. Beschichterklingen.

Die Vorrichtung 1 umfasst ferner eine Erfassungseinrichtung 11 zur Erfassung von die Güte, insbesondere der Oberfläche, einer vermittels der Beschichtungseinrichtung 8 im Rahmen der Durchführung eines Beschichtungsvorgangs aufgebrachten Baumaterialschicht 9 zumindest abschnittsweise qualitativ oder quantitativ beschreibenden Schichtinformationen. Die Erfassungseinrichtung 11 ist dazu eingerichtet, entsprechende Schichtinformationen während eines vermittels der Beschichtungseinrichtung 8 durchgeführten Beschichtungsvorgangs zu erfassen.

Die Erfassungseinrichtung 11 ist in der Beschichtungseinrichtung 8 angeordnet. Dadurch, dass die Erfassungseinrichtung 11 in der Beschichtungseinrichtung 8 angeordnet ist, ist die Bewegungsbahn der Erfassungseinrichtung 11 identisch mit der Bewegungsbahn der Beschichtungseinrichtung 8 im Rahmen eines Beschichtungsvorgangs.

Bei der Erfassungseinrichtung 11 handelt es sich um eine Bilderfassungseinrichtung, insbesondere eine Kameraeinrichtung, zur Erfassung von die Güte, insbesondere der Oberfläche, einer vermittels der Beschichtungseinrichtung 8 im Rahmen der Durchführung eines Beschichtungsvorgangs aufgebrachten Baumaterialschicht 9 zumindest abschnittsweise beschreibenden Schichtbildinformationen. Bei der Bilderfassungseinrichtung handelt es sich um eine Zeilenkamera, welche sich durch eine vergleichsweise hohe laterale Auflösung auszeichnet. Die Bilderfassungseinrichtung ist sonach dazu eingerichtet, entsprechende Schichtbildinformationen eindimensional, d. h. spalten- oder zeilenmäßig, zu erfassen. Der Fokus der Bilderfassungseinrichtung ist selbstverständlich auf eine(n) zu erfassende(n) Baumaterialschicht(bereich) ausgerichtet bzw. eingestellt. Die Bilderfassungseinrichtung ist zweckmäßig mit Beleuchtungsmitteln, d. h. z. B. einer Einrichtung zur Erzeugung eines Blitzlichts, zur zumindest zeitweisen Aus- oder Beleuchtung eines zu erfassenden Baumaterialschichtbereichs ausgestattet.

Vermittels der Erfassungseinrichtung 11 ist es möglich, die Güte, insbesondere der Oberfläche, einer vermittels der Beschichtungseinrichtung 8 aufgebrachten Baumaterialschicht 9 bereits während eines Beschichtungsvorgangs zu erfassen. Die Güte einer vermittels der Beschichtungseinrichtung 8 aufgebrachten Baumaterialschicht 9 betrifft insbesondere Parameter, wie Glattheit, Schichtdicke allgemein die Ordnung, der Baumaterialschicht 9, insbesondere deren Oberfläche. Unter im Hinblick auf ihre Güte zu erfassenden bzw. erfassten, vermittels der Beschichtungseinrichtung 8 aufgebrachten Baumaterialschichten 9 können auch bereits verfestigte Baumaterialschicht(bereiche) und somit Abschnitte des herzustellenden dreidimensionalen Objekts 2 zu verstehen sein. Mithin können entsprechende Schichtinformationen auch die Güte von dreidimensionalen Objekten 2 bzw. Objektoberflächen beschreiben, so dass auch eine Erfassung der Güte von dreidimensionalen Objekten bzw. Objektoberflächen möglich ist.

Die Erfassung der Güte entsprechender Baumaterialschichten 9 erfolgt in jedem Fall mit entsprechenden Beschichtungsvorgängen einhergehen bzw. simultan mit der Durchführung entsprechender Beschichtungsvorgänge zur Aufbringung definierter Baumaterialschichten auf eine Bauebene 10.

Derart können Nebenzeiten reduziert und generative Bauprozesse insgesamt beschleunigt werden.

Über die Erfassungseinrichtung 11 ist zudem eine (frühzeitige) Erfassung von Beeinträchtigungen, d. h. Beschädigungen bzw. Defekten, der Beschichtungseinrichtung 8 möglich, da sich diese unmittelbar in der vermittels der Beschichtungseinrichtung 8 aufgebrachten Baumaterialschicht 9 widerspiegeln und so über entsprechende Schichtinformationen beschrieben werden können. Typischerweise sind Beeinträchtigungen einer Beschichtungseinrichtung 8 daran zu erkennen, dass sich ein definierter Abstand zwischen der aufgebrachten Baumaterialschicht 9 und der Erfassungseinrichtung 11 ändert. Diese Abstandsänderung kann sich, z. B. aufgrund von Fokusänderungen der Erfassungseinrichtung 11, auf die Schichtinformationen auswirken und sonach über entsprechende Schichtinformationen abgebildet werden. Bei der in den in den Fig. gezeigten Ausführungsbeispielen als Bilderfassungseinrichtung ausgebildeten Erfassungseinrichtung 11 können entsprechende Abstandsänderungen Änderungen der Auflösung, des Fokus, der Helligkeit, etc. bedingen.

Die Steuerung des Betriebs der Strahlerzeugungseinrichtung 4 erfolgt über eine der Strahlerzeugungseinrichtung 4 zugeordnete Steuereinrichtung (nicht gezeigt). Die Steuereinrichtung ist dazu eingerichtet, den Betrieb der Strahlerzeugungseinrichtung 4 steuernde Steuerinformationen zu erzeugen und an die Strahlerzeugungseinrichtung 4 zu kommunizieren. Entsprechende Steuerinformationen können Bestrahlungsinformationen, welche vermittels des Energiestrahls 5 zu bestrahlende Bereiche einer selektiv zu verfestigenden, vermittels der Beschichtungseinrichtung 8 aufgebrachten Baumaterialschicht 9, und/oder Strahleigenschaften, insbesondere Energiedichten, Intensitäten, etc., eines zu erzeugenden oder erzeugten Energiestrahls 5 beschreiben, beinhalten. Über die Steuereinrichtung ist es sonach möglich, in Abhängigkeit der über entsprechende Schichtinformationen beschriebenen Güte einer vermittels der Beschichtungseinrichtung 8 aufgebrachten Baumaterialschicht 9 bestimmte Bestrahlungsbereiche und/oder Strahleigenschaften eines Energiestrahls 5 anzupassen bzw. einzustellen.

In dem in Fig. 1 gezeigten Ausführungsbeispiel kann die Strahlungserzeugungseinrichtung 4 derart betrieben werden, dass ein Energiestrahl 5 nach Beendigung eines vermittels der Beschichtungseinrichtung 8 durchgeführten Beschichtungsvorgangs erzeugt wird (vgl. Fig. 1). In dieser Variante erfolgt die Verfestigung des Baumaterials 3 erst nach Beendigung des Beschichtungsvorgangs, d. h. typischerweise auch nach der Erfassung entsprechender Schichtinformationen. Der Energiestrahl 5 wird dabei über die Strahlablenkeinrichtung 6 auf einen Bereich einer vermittels der Beschichtungseinrichtung 8 aufgebrachten Baumaterialschicht 9 gelenkt, zu welchem die eine Erfassungseinrichtung 11 bereits entsprechende Schichtinformationen erfasst hat. Dies ist zweckmäßig, als bestimmte Strahleigenschaften des Energiestrahls 5 in Abhängigkeit der durch die Schichtinformationen beschriebenen Güte der aufgebrachten Baumaterialschicht 9 angepasst bzw. eingestellt werden können.

Gegebenenfalls kann eine Bestrahlung einer Baumaterialschicht 9 auch unterbleiben, sofern die Güte der aufgebrachten Baumaterialschicht 9 bestimmten vorgebbaren oder vorgegebenen Qualitätskriterien nicht genügt. In diesem Fall kann über die Steuereinrichtung eine Nutzerinformation an einen Nutzer ausgegeben werden, welche einem Nutzer eine entsprechenden Qualitätskriterien nicht genügende Baumaterialschicht 9 nach Durchführung eines Beschichtungsvorgangs anzeigt.

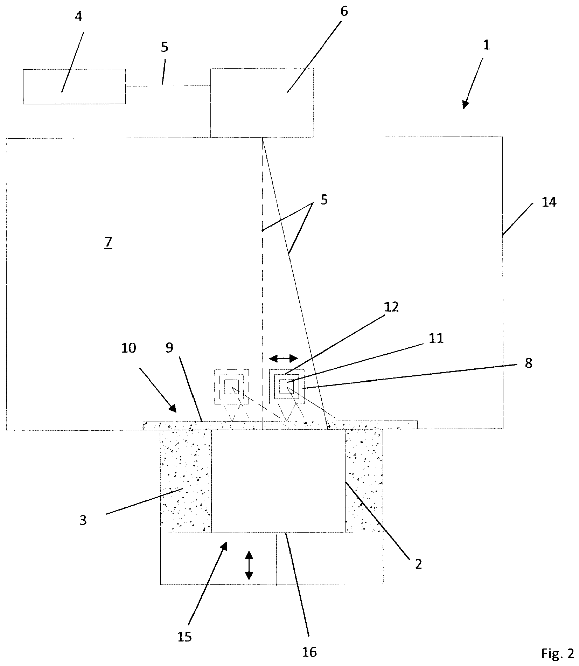

In dem in Fig. 2 gezeigten Ausführungsbeispiel kann die Strahlerzeugungseinrichtung 4 derart betrieben werden, dass ein Energiestrahl 5 (noch) während eines vermittels der Beschichtungseinrichtung 8 durchgeführten Beschichtungsvorgangs erzeugt wird. In dieser Variante erfolgt die Verfestigung des Baumaterials 3 bereits während des Beschichtungsvorgangs, d. h. typischerweise während der Erfassung entsprechender Schichtinformationen. Diese Variante ermöglicht eine besondere Verkürzung von Nebenzeiten sowie eine besondere Beschleunigung generativer Bauprozesse, da Beschichten, Erfassen entsprechender Schichtinformationen und Bestrahlen (im Wesentlichen) simultan oder in engen zeitlichen Abständen durchgeführt werden können. Der Energiestrahl 5 wird dabei über die Strahlablenkeinrichtung 6 ebenso auf einen Bereich einer vermittels der Beschichtungseinrichtung 8 aufgebrachten Baumaterialschicht 9 gelenkt, zu welchem die Erfassungseinrichtung 11 bereits entsprechende Schichtinformationen erfasst hat. Der Energiestrahl 5 wird der Beschichtungseinrichtung 8 sonach nachlaufend nachgeführt (vgl. strichlierte Darstellung). Dies ist zweckmäßig, als bestimmte Strahleigenschaften des Energiestrahls 5 in Abhängigkeit der durch die Schichtinformationen beschriebenen Güte der aufgebrachten Baumaterialschicht 8 angepasst bzw. eingestellt werden können.

Gegebenenfalls kann eine Bestrahlung einer Baumaterialschicht 9 auch in diesem Ausführungsbeispiel unterbleiben, sofern die Güte der aufgebrachten Baumaterialschicht 9 bestimmten vorgebbaren oder vorgegebenen Qualitätskriterien nicht genügt. In diesem Fall kann auch in diesem Ausführungsbeispiel eine Nutzerinformation an einen Nutzer ausgegeben werden, welche einem Nutzer eine entsprechenden Qualitätskriterien nicht genügende Baumaterialschicht 9 nach Durchführung eines Beschichtungsvorgangs anzeigt.

Denkbar ist es jedoch auch, dass der oder ein weiterer Energiestrahl 5 über die Strahlablenkeinrichtung 6 auf einen Bereich einer vermittels der Beschichtungseinrichtung 8 aufgebrachten Baumaterialschicht 9 gelenkt wird, zu welchem die Erfassungseinrichtung 11 noch keine entsprechenden Schichtinformationen erfasst hat. Der oder ein weiterer Energiestrahl 5 kann der Beschichtungseinrichtung 8 sonach auch vorlaufend vorgeführt werden.

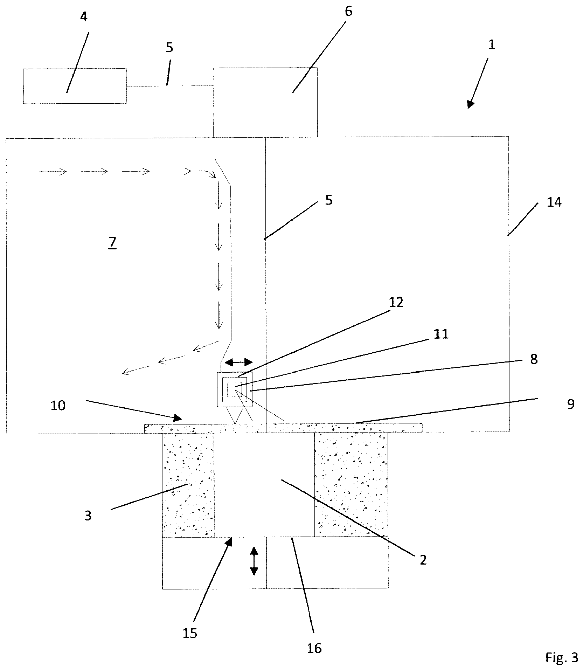

In dem in Fig. 3 gezeigten Ausführungsbeispiel ist gezeigt, dass, sofern ein durch die Pfeile angedeutetes Schutzgas in bzw. durch die Prozesskammer 7 geströmt wird, die Vorrichtung 1 zusätzlich eine bewegbar relativ zu der Bauebene 10 gelagerte Umlenkeinrichtung 13 zur Umlenkung des in die Prozesskammer 7 einströmenden Schutzgasstroms in wenigstens eine von einer Einströmungsrichtung verschiedene Umlenkrichtung umfassen kann. Die Umlenkeinrichtung 13 ist an der Beschichtungseinrichtung 8 angeordnet. Die Umlenkeinrichtung 13 umfasst hier mehrere miteinander verbundene Umlenkelemente, durch welche eine kreislaufartig durch die Prozesskammer 7 zirkulierende Schutzgasströmung erzeugt werden kann.

In den in den Fig. gezeigten Ausführungsbeispielen ist ferner eine Reinigungseinrichtung 12 zur Entfernung von bauprozessbedingten Verunreinigungen von der Erfassungseinrichtung 11 zugehörigen, insbesondere optischen, Erfassungselementen, z. B. einer optischen Linse, gezeigt. Die Reinigungseinrichtung 12 ist dazu eingerichtet, ein fluides Reinigungsmedium, d. h. z. B. ein Gas, auf ein oder entlang wenigstens eines zu reinigenden Erfassungselements zu strömen.

Neben den bisher genannten Funktionskomponenten der Vorrichtung 1 umfasst die Vorrichtung 1 selbstverständlich weitere Funktionskomponenten, welche zur Realisierung generativer Bauprozesse und somit zur generativen Herstellung dreidimensionaler Objekte 2 erforderlich sind. Hierzu zählt insbesondere eine Gehäuseeinrichtung 14 mit der Prozesskammer 7, eine Trageinrichtung 15 zum Tragen herzustellender bzw. hergestellter dreidimensionaler Objekte 2, wobei die Trageinrichtung 15, wie durch den vertikal ausgerichteten Doppelpfeil angedeutet, ein (höhen)beweglich gelagertes Tragelement 16 umfasst, eine Baumaterialaufbring- und/oder Dosiereinrichtung (nicht gezeigt) zur Aufbringung und/oder Dosierung von Baumaterial 3 in die Prozesskammer 7.

Wenngleich in den Fig. nicht gezeigt, kann die Vorrichtung 1 ferner eine weitere Erfassungseinrichtung zur Erfassung, insbesondere die Abmessungen und/oder die Form und/oder die Temperatur beschreibender, Schmelzbereichsinformationen eines vermittels des wenigstens einen Energiestrahls 5 erzeugten aufgeschmolzenen Baumaterialschichtbereichs ("Schmelzpool"), sowie wenigstens eine der weiteren Erfassungseinrichtung zugeordnete Auswerteeinrichtung zur Auswertung erfasster Schmelzbereichsinformationen im Hinblick auf eine Güte des wenigstens einen herzustellenden dreidimensionalen Objekts 2 umfassen. Derart können generative Bauprozesse nach Art einer Schmelzpoolanalyse noch besser überwacht und die Güte herzustellender dreidimensionaler Objekte 2 besser antizipiert bzw. vorausberechnet werden.

Die Vorrichtung 1 kann zudem eine Abfangeinrichtung (nicht gezeigt) zum Abfangen von teilverfestigtem und/oder nichtverfestigtem Baumaterial 3, welches sich bauprozessbedingt aus einer zu verfestigenden Baumaterialschicht 9 löst und unkontrolliert in die Prozesskammer 7 beschleunigt ist, umfassen. Eine entsprechende Abfangeinrichtung weist typischerweise eine, z. B. schlitzartige, Durchtrittsöffnung für den Durchtritt des Energiestrahls 5 auf. Eine entsprechende Abfangeinrichtung kann ebenso bewegbar relativ zu der Bauebene 10 gelagert sein.

Mit den in den Fig. gezeigten Vorrichtung 1 kann ein Verfahren zur generativen Herstellung dreidimensionaler Objekte 2 durch schichtweises selektives Verfestigen eines verfestigbaren Baumaterials 3 vermittels eines von einer Strahlungserzeugungseinrichtung 4 zur Erzeugung eines Energiestrahls 5 zur Verfestigung eines verfestigbaren Baumaterials 3 erzeugten Energiestrahls 5, implementiert werden. Das Verfahren zeichnet sich dadurch aus, dass während eines vermittels einer Beschichtungseinrichtung 8 durchgeführten Beschichtungsvorgangs die Güte, insbesondere der Oberfläche, einer im Rahmen des Beschichtungsvorgangs aufgebrachten Baumaterialschicht 9 beschreibende Schichtinformationen erfasst werden.

### BEZUGSZEICHENLISTE

- 1: Vorrichtung
- 2: Objekt
- 3: Baumaterial
- 4: Strahlerzeugungseinrichtung
- 5: Energiestrahl
- 6: Strahlablenkeinrichtung
- 7: Prozesskammer
- 8: Beschichtungseinrichtung
- 9: Baumaterialschicht
- 10: Bauebene
- 11: Erfassungseinrichtung
- 12: Reinigungseinrichtung
- 13: Umlenkeinrichtung
- 14: Gehäuseeinrichtung
- 15: Trageinrichtung
- 16: Tragelement

## Patentansprüche

1. Vorrichtung (1) zur generativen Herstellung wenigstens eines dreidimensionalen Objekts (2) durch schichtweises selektives Verfestigen wenigstens eines verfestigbaren Baumaterials (3) vermittels wenigstens eines von wenigstens einer Strahlungserzeugungseinrichtung (4) erzeugten Energiestrahls (5), umfassend:
- wenigstens eine Strahlungserzeugungseinrichtung (4) zur Erzeugung wenigstens eines Energiestrahls (5) zur Verfestigung wenigstens eines verfestigbaren Baumaterials (3),
- wenigstens eine Beschichtungseinrichtung (8) zur Durchführung wenigstens eines Beschichtungsvorgangs zur Aufbringung einer definierten Baumaterialschicht (9) wenigstens eines verfestigbaren Baumaterials (3) auf eine Bauebene (10) oder auf eine im Rahmen der Durchführung eines vorherigen Beschichtungsvorgangs zuvor aufgebrachte Baumaterialschicht (9) wenigstens eines verfestigbaren Baumaterials (3), wobei die wenigstens eine Beschichtungseinrichtung (8) bewegbar relativ zu der Bauebene (19) gelagert ist und ein oder mehrere Beschichterelemente umfasst, welche zur Ausbildung definierter Baumaterialschichten über die Bauebene (10) bewegt werden, wobei
- wenigstens eine Erfassungseinrichtung (11) zur Erfassung von die Güte, insbesondere der Oberfläche, einer vermittels der Beschichtungseinrichtung (8) im Rahmen der Durchführung eines Beschichtungsvorgangs aufgebrachten Baumaterialschicht (9) zumindest abschnittsweise beschreibenden Schichtinformationen, wobei die wenigstens eine Erfassungseinrichtung (11) dazu eingerichtet ist, entsprechende Schichtinformationen während eines vermittels der Beschichtungseinrichtung (8) durchgeführten Beschichtungsvorgangs zu erfassen, wobei die wenigstens eine Erfassungseinrichtung (11) relativ zu der Bauebene (10) bewegbar gelagert ist, wobei die wenigstens eine Erfassungseinrichtung (11) mit der wenigstens einen Beschichtungseinrichtung (8) bewegungsgekoppelt ist; sowie
- wenigstens eine weitere Erfassungseinrichtung (11) zur Erfassung, insbesondere die Abmessungen und/oder die Form und/oder die Temperatur beschreibender, Schmelzbereichsinformationen eines vermittels des wenigstens einen Energiestrahls (5) erzeugten aufgeschmolzenen Baumaterialschichtbereichs, sowie wenigstens eine der weiteren Erfassungseinrichtung (11) zugeordnete Auswerteeinrichtung zur Auswertung erfasster Schmelzbereichsinformationen im Hinblick auf eine Güte des wenigstens einen herzustellenden dreidimensionalen Objekts (2);
**dadurch gekennzeichnet dass** die wenigstens eine Erfassungseinrichtung (11) baulich in die wenigstens eine Beschichtungseinrichtung (8) integriert ist.

2. Vorrichtung nach Anspruch 1, wobei die wenigstens eine Erfassungseinrichtung (11) als eine Bilderfassungseinrichtung, insbesondere eine Kameraeinrichtung, zur Erfassung von die Güte, insbesondere der Oberfläche, einer vermittels der Beschichtungseinrichtung (8) im Rahmen der Durchführung eines Beschichtungsvorgangs aufgebrachten Baumaterialschicht (9) wenigstens eines verfestigbaren Baumaterials (3) zumindest abschnittsweise beschreibenden Schichtbildinformationen ausgebildet ist oder wenigstens eine solche umfasst.

3. Vorrichtung nach Anspruch 2, wobei die Bilderfassungseinrichtung dazu eingerichtet ist, entsprechende Schichtbildinformationen ein- oder mehrdimensional zu erfassen.

4. Vorrichtung nach einem der vorherigen Ansprüche, wobei die wenigstens eine Strahlungserzeugungseinrichtung (4) dazu eingerichtet ist, einen Energiestrahl (5) zur Verfestigung des wenigstens einen verfestigbaren Baumaterials (3) nach Beendigung eines vermittels der Beschichtungseinrichtung (8) durchgeführten Beschichtungsvorgangs zu erzeugen, oder die wenigstens eine Strahlungserzeugungseinrichtung (4) dazu eingerichtet ist, einen Energiestrahl (5) zur Verfestigung des wenigstens einen verfestigbaren Baumaterials (3) während eines vermittels der Beschichtungseinrichtung (8) durchgeführten Beschichtungsvorgangs zu erzeugen.

5. Vorrichtung nach Anspruch 4, wobei die wenigstens eine Strahlungserzeugungseinrichtung (4) dazu eingerichtet ist, einen Energiestrahl (5) zur Verfestigung des wenigstens einen verfestigbaren Baumaterials (3) nach Beendigung eines vermittels der Beschichtungseinrichtung (8) durchgeführten Beschichtungsvorgangs zu erzeugen, wobei der Energiestrahl (5), insbesondere über wenigstens eine Strahlablenkeinrichtung (6), auf einen Bereich einer vermittels der Beschichtungseinrichtung (8) aufgebrachten Baumaterialschicht (9) lenkbar ist, zu welchem die wenigstens eine Erfassungseinrichtung (11) bereits entsprechende Schichtinformationen erfasst hat, oder die wenigstens eine Strahlungserzeugungseinrichtung (4) dazu eingerichtet ist, einen Energiestrahl (5) zur Verfestigung des wenigstens einen verfestigbaren Baumaterials (3) während eines vermittels der Beschichtungseinrichtung (8) durchgeführten Beschichtungsvorgangs zu erzeugen, wobei der Energiestrahl (5), insbesondere über wenigstens eine Strahlablenkeinrichtung (6), auf einen Bereich einer vermittels des Beschichtungseinrichtung (8) aufgebrachten Baumaterialschicht (9) lenkbar ist, zu welchem die wenigstens eine Erfassungseinrichtung (11) bereits entsprechende Schichtinformationen erfasst hat, oder auf einen Bereich einer vermittels der Beschichtungseinrichtung (8) aufgebrachten Baumaterialschicht (9) lenkbar ist, zu welchem die wenigstens eine Erfassungseinrichtung (11) noch keine entsprechenden Schichtinformationen erfasst hat.

6. Vorrichtung nach einem der vorhergehenden Ansprüche, ferner umfassend wenigstens eine Steuereinrichtung zur Steuerung des Betriebs der wenigstens einen Strahlerzeugungseinrichtung (4), wobei die wenigstens eine Steuereinrichtung dazu eingerichtet ist, den Betrieb der wenigstens einen Strahlerzeugungseinrichtung (4) steuernde Steuerinformationen in Abhängigkeit erfasster Schichtinformationen zu erzeugen.

7. Vorrichtung nach einem der vorherigen Ansprüche, ferner umfassend wenigstens eine der wenigstens einen Erfassungseinrichtung (11) zugeordnete Reinigungseinrichtung (12) zur Entfernung von bauprozessbedingten Verunreinigungen wenigstens eines der wenigstens einen Erfassungseinrichtung (11) zugehörigen, insbesondere optischen, Erfassungselements.

8. Vorrichtung nach Anspruch 7, wobei die wenigstens eine Reinigungseinrichtung (12) dazu eingerichtet ist, ein fluides Reinigungsmedium auf ein oder entlang eines zu reinigenden Erfassungselements zu strömen.

9. Vorrichtung nach einem der vorhergehenden Ansprüche, ferner umfassend wenigstens eine, insbesondere bewegbar relativ zu einer Bauebene (10) gelagerte, Umlenkeinrichtung zur Umlenkung eines in eine Prozesskammer (7) der Vorrichtung (1) einströmenden Schutzgasstroms in wenigstens eine von einer Einströmungsrichtung verschiedene Umlenkrichtung.

10. Vorrichtung nach einem der vorgehenden Ansprüche, ferner umfassend wenigstens eine Abfangeinrichtung zum Abfangen von teilverfestigtem und/oder nichtverfestigtem Baumaterial (3), welches sich bauprozessbedingt aus einer zu verfestigenden vermittels der Beschichtungseinrichtung (8) aufgebrachten Baumaterialschicht (9) löst und unkontrolliert in eine Prozesskammer (7) der Vorrichtung (1) beschleunigt ist.

11. Verfahren zur generativen Herstellung wenigstens eines dreidimensionalen Objekts (2) durch schichtweises selektives Verfestigen wenigstens eines verfestigbaren Baumaterials (3) vermittels wenigstens eines von wenigstens einer Strahlungserzeugungseinrichtung (4) zur Erzeugung wenigstens eines Energiestrahls (5) zur Verfestigung wenigstens eines verfestigbaren Baumaterials (3) erzeugten Energiestrahls (5) mit einer Vorrichtung (1) nach einem der vorhergehenden Ansprüche, **dadurch gekennzeichnet, dass** während eines vermittels einer Beschichtungseinrichtung (8), insbesondere zur Durchführung wenigstens eines Beschichtungsvorgangs zur Aufbringung einer definierten Baumaterialschicht (9) wenigstens eines verfestigbaren Baumaterials (3) auf eine Bauebene (10) oder auf eine vermittels der Beschichtungseinrichtung (8) im Rahmen der Durchführung eines vorherigen Beschichtungsvorgangs zuvor aufgebrachte Baumaterialschicht (9) wenigstens eines verfestigbaren Baumaterials (3), durchgeführten Beschichtungsvorgangs die Güte, insbesondere der Oberfläche, einer im Rahmen des Beschichtungsvorgangs aufgebrachten Baumaterialschicht (9) beschreibende Schichtinformationen erfasst werden, sowie ein
Erfassen von, insbesondere die Abmessungen und/oder die Form und/oder die Temperatur beschreibenden, Schmelzbereichsinformationen eines vermittels des wenigstens einen Energiestrahls (5) erzeugten aufgeschmolzenen Baumaterialschichtbereichs, sowie Auswerten erfasster Schmelzbereichsinformationen im Hinblick auf eine Güte des wenigstens einen herzustellenden dreidimensionalen Objekts (2) erfolgt.

## Claims

1. Device (1) for generative production of at least one three-dimensional object (2) by layer-by-layer selective solidification of at least one solidifiable building material (3) by means of at least one energy beam (5) generated by at least one radiation generating device (4), comprising:
- at least one radiation generating device (4) for generating at least one energy beam (5) for solidifying at least one solidifiable building material (3),
- at least one coating device (8) for carrying out at least one coating process for applying a defined building material layer (9) of at least one solidifiable building material (3) to a building plane (10) or to a building material layer (9) of at least one solidifiable building material (3) previously applied in the course of carrying out a previous coating process, wherein
the at least one coating device (8) is mounted movably relative to the construction plane (19) and comprises one or more coating elements which are moved over the construction plane (10) to form defined construction material layers, wherein
- at least one detection device (11) for detecting layer information describing the quality, in particular the surface, of a building material layer (9) applied by means of the coating device (8) in the course of carrying out a coating process, at least in sections, the at least one detection device (11) being set up for this purpose, corresponding layer information during a coating process carried out by means of the coating device (8), the at least one detection device (11) being mounted such that it can move relative to the construction plane (10), the at least one detection device (11) being motion-coupled to the at least one coating device (8); and
- at least one further detection device (11) for detecting melt region information, in particular describing the dimensions and/or the shape and/or the temperature, of a melted building material layer region produced by means of the at least one energy beam (5), and at least one evaluation device associated with the further detection device (11) for evaluating detected melt region information with regard to a quality of the at least one three-dimensional object (2) to be produced;
**characterized in that** the at least one detection device (11) is structurally integrated into the at least one coating device (8).

2. Device according to claim 1, wherein the at least one detection device (11) is designed as an image detection device, in particular a camera device, for detecting layer image information describing the quality, in particular the surface, of a building material layer (9), applied by means of the coating device (8) in the course of carrying out a coating process, of at least one solidifiable building material (3) at least in sections, or comprises at least one such layer image.

3. Device according to claim 2, wherein the image capturing device is arranged to capture corresponding layer image information in one or more dimensions.

4. Device according to any one of the preceding claims, wherein the at least one radiation generating means (4) is adapted to generate an energy beam (5) for solidifying the at least one solidifiable building material (3) after completion of a coating operation performed by means of the coating means (8), or
the at least one radiation generating device (4) is arranged to generate an energy beam (5) for solidifying the at least one solidifiable building material (3) during a coating process carried out by means of the coating device (8).

5. Device according to claim 4, wherein the at least one radiation generating device (4) is arranged to generate an energy beam (5) for solidifying the at least one solidifiable building material (3) after completion of a coating process carried out by means of the coating device (8), wherein the energy beam (5), in particular via at least one beam deflecting device (6), can be directed onto a region of a building material layer (9) applied by means of the coating device (8), for which the at least one detection device (11) has already detected corresponding layer information, or
the at least one radiation generating device (4) is set up to generate an energy beam (5) for solidifying the at least one solidifiable building material (3) during a coating process carried out by means of the coating device (8), the energy beam (5), in particular via at least one beam deflecting device (6), can be directed to a region of a building material layer (9) applied by means of the coating device (8), for which the at least one detection device (11) has already detected corresponding layer information, or can be directed to a region of a building material layer (9) applied by means of the coating device (8), for which the at least one detection device (11) has not yet detected any corresponding layer information.

6. Device according to one of the preceding claims, further comprising at least one control device for controlling the operation of the at least one beam generating device (4), wherein the at least one control device is set up to generate control information controlling the operation of the at least one beam generating device (4) as a function of detected layer information.

7. Device according to any one of the preceding claims, further comprising at least one cleaning device (12) associated with the at least one detection device (11) for removing construction process-related impurities from at least one, in particular optical, detection element associated with the at least one detection device (11).

8. Device according to claim 7, wherein the at least one cleaning device (12) is arranged to flow a fluid cleaning medium onto or along a detection element to be cleaned.

9. Device according to one of the preceding claims, further comprising at least one deflection device, in particular mounted movably relative to a construction plane (10), for deflecting a protective gas stream flowing into a process chamber (7) of the device (1) in at least one deflection direction different from an inflow direction.

10. Device according to one of the preceding claims, further comprising at least one intercepting device for intercepting partially consolidated and/or non-consolidated construction material (3) which, as a result of the construction process, detaches from a layer of construction material (9) to be consolidated applied by means of the coating device (8) and is accelerated in an uncontrolled manner into a process chamber (7) of the apparatus (1).

11. Method for generative production of at least one three-dimensional object (2) by layer-by-layer selective solidification of at least one solidifiable building material (3) by means of at least one energy beam (5) generated by at least one radiation generating device (4) for generating at least one energy beam (5) for solidifying at least one solidifiable building material (3) with an apparatus (1) according to one of the preceding claims, **characterized in that**, during a process carried out by means of a coating device (8), in particular for carrying out at least one coating process for applying a defined building material layer (9) of at least one solidifiable building material (3) to a building level (10) or to a building material layer (9) of at least one solidifiable building material (3) previously applied by means of the coating device (8) in the course of carrying out a previous coating process, layer information describing the quality, in particular of the surface, of a building material layer (9) applied in the course of the coating process is detected, and melting region information, in particular describing the dimensions and/or the shape and/or the temperature, of a melted building material layer region produced by means of the at least one energy beam (5) is detected, and detected melting region information is evaluated with regard to a quality of the at least one three-dimensional object (2) to be produced.

## Revendications

1. Dispositif (1) pour la fabrication générative d'au moins un objet tridimensionnel (2) par solidification sélective par couches d'au moins un matériau de construction solidifiable (3) au moyen d'au moins un faisceau d'énergie (5) généré par au moins un dispositif de génération de rayonnement (4), comprenant :
- au moins un dispositif de génération de rayonnement (4) pour générer au moins un faisceau d'énergie (5) pour consolider au moins un matériau de construction (3) pouvant être consolidé,
- au moins un dispositif de revêtement (8) pour l'exécution d'au moins une opération de revêtement pour l'application d'une couche de matériau de construction définie (9) d'au moins un matériau de construction (3) solidifiable sur un plan de construction (10) ou sur une couche de matériau de construction (9) d'au moins un matériau de construction (3) solidifiable appliquée auparavant dans le cadre de l'exécution d'une opération de revêtement précédente, dans lequel
l'au moins un dispositif de revêtement (8) est monté de manière mobile par rapport au plan de construction (19) et comprend un ou plusieurs éléments de revêtement qui sont déplacés sur le plan de construction (10) pour former des couches de matériau de construction définies, où
- au moins un dispositif de détection (11) pour détecter des informations de couche décrivant au moins par sections la qualité, en particulier la surface, d'une couche de matériau de construction (9) appliquée au moyen du dispositif de revêtement (8) dans le cadre de la réalisation d'une opération de revêtement, le au moins un dispositif de détection (11) étant conçu à cet effet, saisir des informations de couche correspondantes pendant une opération de revêtement réalisée au moyen du dispositif de revêtement (8), le au moins un dispositif de saisie (11) étant monté mobile par rapport au plan de construction (10), le au moins un dispositif de saisie (11) étant couplé en mouvement avec le au moins un dispositif de revêtement (8) ; ainsi que
- au moins un autre dispositif de détection (11) pour la détection d'informations de zone de fusion, décrivant en particulier les dimensions et/ou la forme et/ou la température, d'une zone de couche de matériau de construction fondue produite au moyen du au moins un faisceau d'énergie (5), ainsi qu'au moins un dispositif d'évaluation associé à l'autre dispositif de détection (11) pour l'évaluation d'informations de zone de fusion détectées en vue d'une qualité du au moins un objet tridimensionnel (2) à fabriquer ;
**caractérisé en ce que** l'au moins un dispositif de détection (11) est intégré par construction dans l'au moins un dispositif de revêtement (8).

2. Dispositif selon la revendication 1, dans lequel l'au moins un dispositif de détection (11) est conçu comme un dispositif de détection d'images, en particulier un dispositif de caméra, pour détecter des informations d'image de couche décrivant au moins par sections la qualité, en particulier la surface, d'une couche de matériau de construction (9) d'au moins un matériau de construction (3) solidifiable appliquée au moyen du dispositif de revêtement (8) dans le cadre de la réalisation d'une opération de revêtement, ou comprend au moins un tel dispositif.

3. Dispositif selon la revendication 2, dans lequel le dispositif d'acquisition d'images est conçu pour acquérir des informations d'image de couche correspondantes de manière unidimensionnelle ou pluridimensionnelle.

4. Dispositif selon l'une quelconque des revendications précédentes, dans lequel ledit au moins un dispositif de génération de rayonnement (4) est adapté pour générer un faisceau d'énergie (5) pour solidifier ledit au moins un matériau de construction solidifiable (3) après la fin d'une opération de revêtement réalisée au moyen dudit dispositif de revêtement (8), ou
le au moins un dispositif de génération de rayonnement (4) est adapté pour générer un faisceau d'énergie (5) pour solidifier le au moins un matériau de construction solidifiable (3) pendant une opération de revêtement réalisée au moyen du dispositif de revêtement (8).

5. Dispositif selon la revendication 4, dans lequel l'au moins un dispositif de génération de rayonnement (4) est conçu pour générer un faisceau d'énergie (5) pour la solidification de l'au moins un matériau de construction solidifiable (3) après la fin d'un processus de revêtement réalisé au moyen du dispositif de revêtement (8), le faisceau d'énergie (5) pouvant être dirigé, en particulier par l'intermédiaire d'au moins un dispositif de déviation de faisceau (6), sur une zone d'une couche de matériau de construction (9) appliquée au moyen du dispositif de revêtement (8), pour laquelle l'au moins un dispositif de détection (11) a déjà détecté des informations de couche correspondantes, ou bien
le au moins un dispositif de génération de rayonnement (4) est conçu pour générer un faisceau d'énergie (5) pour la solidification du au moins un matériau de construction (3) solidifiable pendant une opération de revêtement réalisée au moyen du dispositif de revêtement (8), le faisceau d'énergie (5) étant généré, en particulier par l'intermédiaire d'au moins un dispositif de déviation de faisceau (6), sur une zone d'une couche de matériau de construction (9) appliquée au moyen du dispositif de revêtement (8), pour laquelle l'au moins un dispositif de détection (11) a déjà détecté des informations de couche correspondantes, ou sur une zone d'une couche de matériau de construction (9) appliquée au moyen du dispositif de revêtement (8), pour laquelle l'au moins un dispositif de détection (11) n'a pas encore détecté d'informations de couche correspondantes.

6. Dispositif selon l'une des revendications précédentes, comprenant en outre au moins un dispositif de commande pour commander le fonctionnement de l'au moins un dispositif de génération de faisceau (4), l'au moins un dispositif de commande étant conçu pour générer des informations de commande commandant le fonctionnement de l'au moins un dispositif de génération de faisceau (4) en fonction d'informations de couche détectées.

7. Dispositif selon l'une des revendications précédentes, comprenant en outre au moins un dispositif de nettoyage (12) associé à l'au moins un dispositif de détection (11) pour éliminer les impuretés dues au processus de construction d'au moins un élément de détection, notamment optique, associé à l'au moins un dispositif de détection (11).

8. Dispositif selon la revendication 7, dans lequel ledit au moins un dispositif de nettoyage (12) est agencé pour faire circuler un milieu de nettoyage fluide sur ou le long d'un élément de détection à nettoyer.

9. Dispositif selon l'une des revendications précédentes, comprenant en outre au moins un dispositif de déviation, notamment monté mobile par rapport à un plan de construction (10), pour dévier un flux de gaz protecteur entrant dans une chambre de traitement (7) du dispositif (1) dans au moins une direction de déviation différente d'une direction d'entrée.

10. Dispositif selon l'une des revendications précédentes, comprenant en outre au moins un dispositif d'interception pour intercepter le matériau de construction (3) partiellement consolidé et/ou non consolidé, qui se détache, en raison du processus de construction, d'une couche de matériau de construction (9) à consolider, appliquée au moyen du dispositif de revêtement (8), et qui est accéléré de manière incontrôlée dans une chambre de traitement (7) du dispositif (1).

11. Procédé de fabrication générative d'au moins un objet tridimensionnel (2) par solidification sélective couche par couche d'au moins un matériau de construction solidifiable (3) au moyen d'au moins un faisceau d'énergie (5) généré par au moins un dispositif de génération de rayonnement (4) pour générer au moins un faisceau d'énergie (5) pour la solidification d'au moins un matériau de construction solidifiable (3) avec un dispositif (1) selon l'une des revendications précédentes, **caractérisé en ce que**, pendant un processus de fabrication au moyen d'un dispositif de revêtement (8), en particulier pour la réalisation d'au moins une opération de revêtement pour l'application d'une couche de matériau de construction (9) définie d'au moins un matériau de construction (3) solidifiable sur un plan de construction (10) ou sur une couche de matériau de construction (9) d'au moins un matériau de construction (3) solidifiable appliquée auparavant au moyen du dispositif de revêtement (8) dans le cadre de la réalisation d'une opération de revêtement précédente, des informations de couche décrivant la qualité, en particulier de la surface, d'une couche de matériau de construction (9) appliquée dans le cadre de l'opération de revêtement sont détectées, ainsi qu'une
l'enregistrement d'informations de zone de fusion, décrivant en particulier les dimensions et/ou la forme et/ou la température, d'une zone de couche de matériau de construction fondue produite au moyen du au moins un faisceau d'énergie (5), ainsi que l'évaluation d'informations de zone de fusion enregistrées en vue d'une qualité du au moins un objet tridimensionnel (2) à fabriquer.
